# EUROPÄISCHE PATENTSCHRIFT

(11) **EP 0 722 193 B1**
(45) Veröffentlichungstag und Bekanntmachung des Hinweises auf die Patenterteilung: **19.04.2000**
(21) Anmeldenummer: 95810026.5
(22) Anmeldetag: 16.01.1995
(51) Int. Cl.: H01M 8/02, H01M 8/12, H01M 8/24

(54) **Elektrochemisch aktives Element zu einer planaren Hochtemperatur-Brennstoffzelle**
Elektrochemical active element for a planar high-temperature fuel cell
Elément électrochimique actif pour une pile à combustible de type plan fonctionnant à haute température

(43) Veröffentlichungstag der Anmeldung: 17.07.1996
(73) Patentinhaber: Sulzer Hexis AG, 8400 Winterthur (CH)
(72) Erfinder: Honegger, Kaspar, Dr., CH-8344 Bäretswil (CH); Batawi, Emad, Dr., CH-8409 Winterthur (CH)
(74) Vertreter: Heubeck, Bernhard

(56) Entgegenhaltungen:
- EP-A- 0 437 175
- EP-A- 0 440 968
- EP-A- 0 551 054
- DE-A- 4 016 157
- DE-A- 4 205 210
- JOURNAL OF THE CERAMIC SOCIETY OF JAPAN, INTERNATIONAL EDITION, Bd. 100, Nr. 6, Juni 1992 TOKYO JP, Seiten 838-841, TASUYA KAWADA ET AL 'Fabrication of a Planar Solid Oxide Fuel Cell by Tape-Casting and Co-Firing Method'
- PROC. - ELECTROCHEM.SOC., Bd. 89, Nr. 111, 1989 Seiten 325-336, MASAYUKI DOKLYA ET AL 'OVERVIEW OF PLANAR SOFC DEVELOPMENT AT NCLI'
- PATENT ABSTRACTS OF JAPAN vol. 13 no. 493 (E-842) ,8.November 1989 & JP-A-01 197972 (AGENCY OF IND SCIENCE & TECHNOL) 9.August 1989,
- PATENT ABSTRACTS OF JAPAN vol. 014 no. 479 (E-0992) ,18.Oktober 1990 & JP-A-02 197055 (OSAKA GAS CO LTD) 3.August 1990,
- PATENT ABSTRACTS OF JAPAN vol. 13 no. 99 (E-724) [3447] ,8.März 1989 & JP-A-63 274062 (FUJIURA LTD) 11.November 1988,

## Beschreibung

Die Erfindung betrifft ein elektrochemisch aktives Element zu einer planaren Hochtemperatur-Brennstoffzelle gemäss Anspruch 1.

Aus der US-A- 5 270 131 ist eine zentralsymmetrische Hochtemperatur-Brennstoffzelle bekannt, bei der eine elektrochemisch aktive Platte, die sich aus einem Feststoffelektrolyten und zwei Elektroden zusammensetzt, über eine Vielzahl regelmässig angeordneter Kontaktelemente mit einer metallischen Stützstruktur verbunden ist. Dank dieser Stützstruktur erhält die elektrochemisch aktive Platte eine Verstärkung, die die Gefahr eines Zerbrechens beträchtlich reduziert.

Dieses bekannte Element, das aus der elektrochemisch aktiven Platte, den Kontaktelementen und der Stützstruktur besteht, kann nur mit beträchtlichem Aufwand hergestellt werden. Da als Werkstoff für die Stützstruktur ein Metall vorgesehen ist, bestehen auch Probleme bezüglich Oxidation und der Verbindung zwischen den Kontaktelementen und der Elektrodenschicht.

Es ist daher Aufgabe der Erfindung, ein elektrochemisch aktives Element zu schaffen, das die Nachteile des bekannten Elements nicht aufweist. Diese Aufgabe wird durch die Merkmale des Anspruchs 1 gelöst. Dabei erscheint anstelle der bekannten Stützstruktur eine offenporige Schicht, die aus einem keramischen Material besteht. Diese Schicht ist auf der Kathodenseite angeordnet, d.h. auf der kritischen Seite, auf der Oxidationsprobleme beim bekannten Element vorliegen.

Die abhängigen Ansprüche 2 bis 7 betreffen vorteilhafte Ausführungsformen des elektrochemisch aktiven Elements gemäss der Erfindung. Die Ansprüche 8 und 10 beziehen sich auf zwei Verfahren zum Herstellen eines derartigen Elements. Die folgenden Ansprüche betreffen Brennstoffzellen bzw. Brennstoffzellen-Batterien mit erfindungsgemässen Elementen als Komponenten.

Mit Vorteil wird die offenporige Schicht aus Kathodenmaterial hergestellt. Dabei kann man beispielsweise wie folgt vorgehen. Man beschichtet das Gerippe eines offenporigen Kunststoffschaums mit einem aus Kathodenmaterial bestehenden Schlicker. Nach dem Trocknen erhält man durch Sintern eine tragfeste Struktur. Beim Sintern verflüchtigt sich auch das Material des Kunststoffgerippes.

Die offenporige Schicht zeichnet aufgrund ihrer zellulären, offenporigen Struktur keine Bewegungsrichtung eines in ihr fliessenden Gases aus: es liegt ein isotropes Fliessen vor. Die Strukturzellen der Schicht sind verglichen mit deren Dicke relativ klein: Die Schichtdicke ist mindestens rund zweimal grösser als ein mittlerer Durchmesser der Zellen. Dabei ist der mittlere Durchmesser beispielsweise als Kubikwurzel aus dem arithmetischen Mittel des Zellvolumens (= Gesamtvolumen dividiert durch Anzahl Zellen) definierbar.

Nachfolgend wird die Erfindung anhand der Zeichnungen erläutert. Es zeigen:
- Fig. 1: einen Längsschnitt durch einen Stapel von zentralsymmetrischen Brennstoffzellen, wobei nur eine Zelle vollständig dargestellt ist,
- Fig. 2: eine zweite Zelle,
- Fig. 3: einen Schnitt nach der Linie III - III in Fig.2,
- Fig.4,5: Schnitte wie in Fig.3 für weitere Ausführungsformen der Brennstoffzelle,
- Fig. 6: eine zelluläre, offenporige Struktur,
- Fig. 7: einen Schnitt durch ein erstes erfindungsgemässes Element,
- Fig. 8: einen Schnitt durch ein zweites erfindungsgemässes Element,
- Fig. 9: einen Schnitt durch eine offenporige Schicht eines weiteren Ausführungsbeispiels.

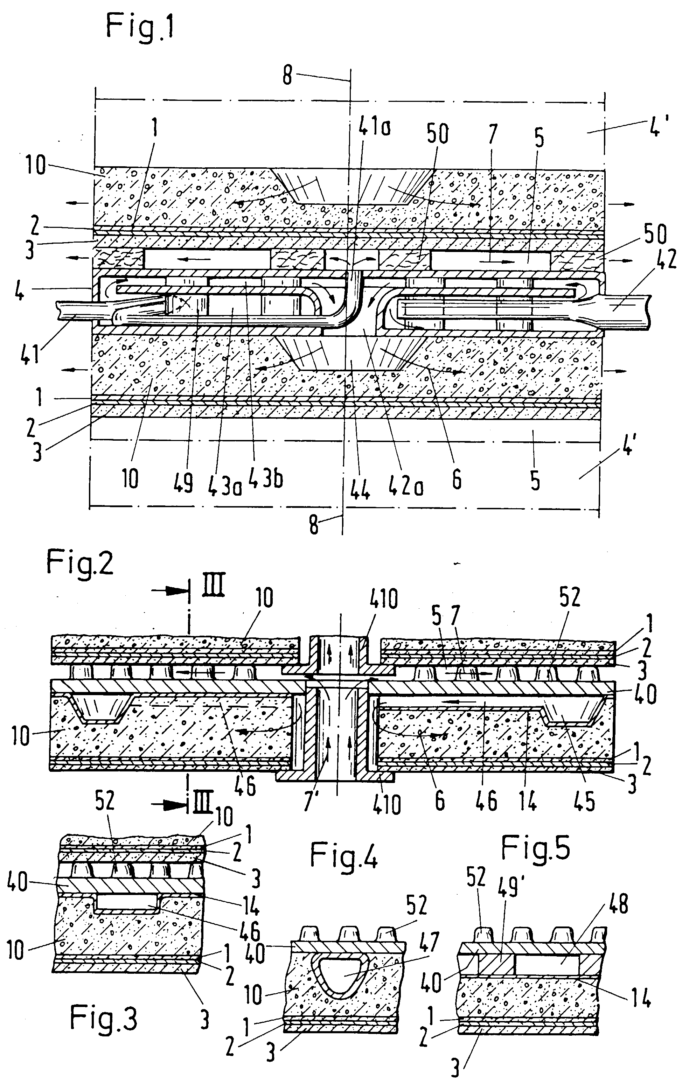

Die in Fig.1 dargestellte Brennstoffzelle, die Teil einer stapelförmigen Batterie ist (strichpunktiert angedeutet), umfasst folgende Komponenten: eine offenporige Schicht 10 mit einer Kathodenschicht 1, die eine Randzone der Schicht 10 bildet; eine Elektrolytschicht 2; eine Anodenschicht 3; einen metallischen Hohlkörper 4, mittels dem Brenngas (Zufuhrrohr 41) sowie sauerstoffhaltiges Gas (Zufuhrrohr 42) vorgewärmt und den Elektroden 1 bzw. 3 zugeführt wird; und einen Raum 5 mit elektrisch leitenden Verbindungsstücken 50, in welchem das Brenngas mit der Anode 3 in Kontakt gebracht wird. Die Pfeile 6 und 7 geben den Strömungsverlauf des sauerstoffhaltigen Gases bzw. des Brenngases an. Das sauerstoffhaltige Gas ist in der Regel Luft und wird daher nachfolgend kurz mit Luft bezeichnet.

Die Schichten 10, 1, 2 und 3 bilden als Gesamtheit das elektrochemisch aktive Element gemäss der Erfindung. Es sind zwei dieser Elemente in Fig.1 dargestellt. Strichpunktiert sind die Hohlkörper 4' benachbarter Brennstoffzellen angedeutet. Die strichpunktierte Linie 8 gibt die zentrale Achse des Stapels an.

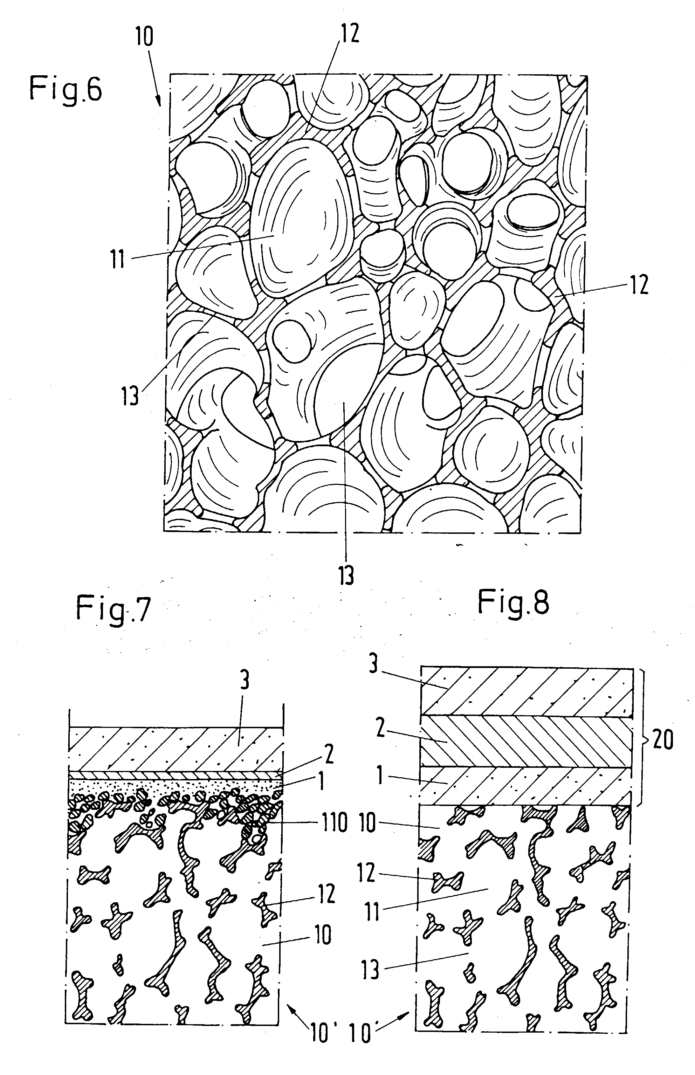

Die Struktur der offenporigen Schicht 10 wird anhand der Figuren 6 und 7 beschrieben. Die Verbindungsstücke 50 bestehen aus einem Metallfilz; sie bilden im vorliegenden Ausführungsbeispiel zwei konzentrische Ringe.

Die Luft, die durch das Rohr 42 in den Hohlkörper 4 eingespeist wird, nimmt in den Kammern 43a und 43b einen Teil der Wärme auf, die bei den elektrochemischen Reaktionen freigesetzt wird. Die vorgewärmte Luft gelangt durch eine zentrale Austrittsöffnung 42a in die zentrale Vertiefung 44 der Schicht 10 und fliesst anschliessend innerhalb der Schicht 10 radial zur Peripherie des Zellenstapels, wobei gleichzeitig ein Transport von Sauerstoff zur Kathode 1 stattfindet. Es kann pro Brennstoffzelle mehr als ein Zufuhrrohr 42 für die Luft vorgesehen sein. Stege 49 im Hohlkörper 4 sorgen für dessen Stabilität gegen Druckkräfte, die zur Herstellung elektrischer Kontakte zwischen benachbarten Zellen aufgebracht werden müssen. Das Brenngas, das im Rohr 41 vorgewärmt wird, tritt an der Stelle 41a in den Gasraum 5 ein und strömt anschliessend ebenfalls radial zur Peripherie des Zellenstapels.

Im zweiten Ausführungsbeispiel, Fig. 2, erfolgt die Gaszufuhr (Pfeile 7') zentral über zylindrische Teile 410, die aus einem Material bestehen, das nicht elektrisch leitend ist. Die Luft wird über einen Ringkanal 45 und radiale Kanäle 46 ins Zellenzentrum geleitet. Es sind Luftzufuhrleitungen vorgesehen (nicht dargestellt), die in den Ringkanal 45 münden. In den Kanälen 45 und 46 erfolgt die Vorwärmung der Luft. Die obere Seite der offenporigen Schicht 10 ist durch eine Randschicht 14 abgedichtet, so dass die vorgewärmte Luft nur zentral in die Schicht 10 eintreten kann. Der Gasraum 5 wird von den Luftkanälen 45, 46 durch eine Metallplatte 40 getrennt. Diese Platte 40 tritt an die Stelle des Hohlkörpers 4 in Fig.4. Elektrische Verbindungen zwischen der Platte 40 und der Anode 3 werden durch Noppen 52 hergestellt.

Fig.3 stellt einen Schnitt durch die Brennstoffzelle der Fig.2 dar, welcher senkrecht zum radialen Kanal 46 verläuft. Die Figuren 4 und 5 zeigen entsprechende Schnitte. Im Beispiel der Fig.4 werden die radialen Kanäle durch in die Schicht 10 eingelegte Rohre 47 gebildet. In Fig.5 sind die Luftkanäle 48 über der Schicht 10 angeordnet. Stege 49' bilden die Seitenwände der Kanäle 48. Die Schicht 10 weist an ihrer Oberseite wieder eine abdichtende Randzone 14 auf.

Fig.6 zeigt einen Keramikschaum. Diese Darstellung kann sowohl als Draufsicht als auch als beliebiger Querschnitt durch bzw. auf die offenporige Schicht 10 des erfindungsgemässen Elements angesehen werden. Derartige Keramikschaumkörper sind als Filter für Metallschmelzen bekannt. Die Herstellung eines solchen Körpers ist beispielsweise in der CH-PS 679394 beschrieben. Die Wände 12 der Zellen 11 weisen Durchbrüche 13 auf. Dank dieser Durchbrüche 13 bilden die Zellen 11 einen vollständig kommunizierenden Porenraum, der ein isotropes Fliessen von Luft durch den Schaumkörper ermöglicht. Der mittlere Zellendurchmesser beträgt rund 1 mm.

Fig.7 zeigt ausschnittsweise einen Querschnitt durch ein erfindungsgemässes elektrochemisch aktives Element, bestehend aus offenporiger Schicht 10, Kathode 1, Elektrolyt 2 und Anode 3. Die Schicht 10 weist die in Fig.6 gezeigte Struktur auf. Es sind nur die Schnittflächen der Zellenwände 12 dargestellt. Dieses Element wird wie folgt hergestellt: Es wird mit einer offenporigen Schicht 10 begonnen, die aus Kathodenmaterial gefertigt ist und in Form einer stabilen Platte 10' vorliegt. Damit die Stabilität der Platte 10' ausreichend ist, muss die Plattendicke rund 5 bis 7 mm betragen, wobei ein mittlerer Durchmesser der Zellen 11 von rund 1 mm und ein Plattendurchmesser von rund 200 mm vorgesehen sind. Die eine Oberfläche dieser porösen Platte 10' wird mit einem grobkörnigen Pulver 101 aus Kathodenmaterial beschichtet, so dass die Poren oder Zellen einer Randzone gefüllt werden. Über diese erste Lage kommt eine zweite, aus feinkörnigem Pulver bestehende Lage, die schliesslich die eigentliche Kathode 1 bilden wird. Die so präparierte Platte 10' wird gebrannt, so dass die aufgebrachten Pulverpartikel zusammen und mit dem Schaumkörper versintern. Nach dem Sintern wird das Elektrolytmaterial beispielsweise mit einem PVD-Verfahren aufgedampft. Es können so sehr dünne Schichten 2 - beispielsweise mit einer Schichtdicke von rund 3 µm - erzeugt werden. Dünne Elektrolytschichten sind vorteilhaft, da sie zu einem guten Wirkungsgrad der Brennstoffzelle führen. Auf die Elektrolytschicht wird nach bekannten Verfahren die Anodenschicht 3 aufgebracht.

Fig.8 zeigt das Produkt eines anderen Verfahrens. Hier ist eine bekannte "PEN-Platte" 20, die dreischichtig ausgebildet ist und die sich aus den zwei Elektroden 1 und 2 sowie dem Elektrolyten 2 zusammensetzt, verwendet worden (siehe z.B. EP-A 0551 054 = P.6470). Diese PEN-Platte 20 wird mit der porösen Platte 10' des ersten Verfahrens durch Sintern verbunden.

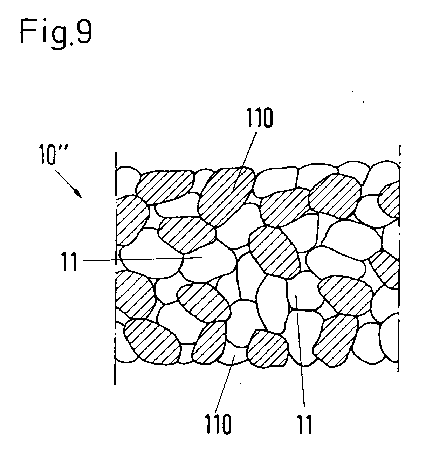

Die poröse Platte 10' kann - siehe Fig.9 - auch eine andere Struktur aufweisen, die das Ergebnis eines anderen Verfahrens ist. So kann man beispielsweise grobkörniges Pulver aus Kathodenmaterial mit Kohlepartikeln vermischen und diese Mischung zu einer Platte pressen. Durch Brennen einer derartigen Platte werden die Kohlepartikel ausgebrannt und die Partikel 110 zusammengesintert. So erhält man beispielsweise eine poröse Platte 10", wie sie in Fig.9 als Schnitt dargestellt ist. Die verschwundenen Kohlepartikel hinterlassen Lücken, die die Zellen 11 der porösen Schicht bilden.

Textiles Gewebe oder mehrere Lagen von Geweben können bei der Versiegelung der randständigen Poren der porösen Platten 10' (Fig.7) oder 10" (Fig.9) zu Hilfe genommen werden. In diesen Fällen wird mittels Schlicker das Gewebe derart imprägniert, dass alle Öffnungen zwischen den Gewebefäden gefüllt sind. Mit dem imprägnierten Gewebe wird die Oberfläche der Platten abgedichtet.

## Patentansprüche

1. Elektrochemisch aktives Element, das ein separierbares Bauteil zu einer planaren Hochtemperatur-Brennstoffzelle bildet, bestehend aus einer offenporig strukturierten Schicht (10) als Stützstruktur, schichtförmigen Elektroden (1, 3) und einem Feststoffelektrolyten (2), der als Zwischenschicht die Elektroden verbindet, wobei die eine Elektrode, die Kathode (1), für Reaktionen mit Sauerstoff aus einem sauerstoffhaltigen Gas vorgesehen ist, die Kathode (1) mit der strukturierten Schicht (10) unlösbar verbunden ist, die offenporige Struktur dieser Schicht (10) zellulär ausgebildet ist, aus einem keramischen, bei der Betriebstemperatur der Brennstoffzelle elektrisch leitenden Material besteht und ein Fliessen des sauerstoffhaltigen Gases parallel zur Elektrolytschicht ermöglicht, die Dicke der Schicht (10) mindestens rund zweimal grösser als ein mittlerer Durchmesser der Strukturzellen (11) ist und die Kathode (1) mit der Schicht (10) durch Sintern direkt oder mittels Kathodenmaterial verbunden ist.

2. Element nach Anspruch 1, dadurch gekennzeichnet, dass die offenporige Schicht (10) aus gesintertem Kathodenmaterial besteht.

3. Element nach Anspruch 1 oder 2, dadurch gekennzeichnet, dass die offenporige Schicht (10) die Struktur eines offenporigen Schaums aufweist.

4. Element nach einem der Ansprüche 1 bis 3, dadurch gekennzeichnet, dass die offenporige Schicht (10) an der von der Elektrolytschicht abgewandten Seite eine die Poren versiegelnde Randzone (14) aufweist.

5. Element nach einem der Ansprüche 1 bis 4, dadurch gekennzeichnet, dass in der offenporigen Schicht Kanäle (45 - 47) für eine Vorwärmung und Einspeisung des sauerstoffhaltigen Gases vorgesehen sind.

6. Element nach einem der Ansprüche 1 bis 5, dadurch gekennzeichnet, dass die Kathode (1) eine porenschliessende Randzone der offenporigen Schicht bildet.

7. Element nach einem der Ansprüche 1 bis 6, dadurch gekennzeichnet, dass die Elektrolytschicht (2) eine Dicke kleiner als 10 Mikrometer, vorzugsweise kleiner als 3 Mikrometer aufweist.

8. Verfahren zum Herstellen eines Elementes gemäss einem der Ansprüche 1 bis 7, dadurch gekennzeichnet, dass auf eine selbsttragende Platte (10'), die die genannten Eigenschaften der offenporigen Schicht (10') aufweist, eine porenschliessende Kathodenschicht (110, 1) aufgebracht wird, dass auf diese Schicht durch Aufdampfen oder Aufsprühen eine dünne Elektrolytschicht (2) aufgetragen wird und dass schliesslich der Elektrolyt mit Anodenmaterial (3) beschichtet wird.

9. Verfahren zum Herstellen eines Elementes gemäss einem der Ansprüche 1 bis 5, dadurch gekennzeichnet, dass einerseits eine elektrochemisch aktive Platte (20), bestehend aus einer Elektrolytschicht (2) und beiderseits aufgebrachten Elektrodenschichten (1, 3), und andererseits eine selbsttragende Platte (10'), die die genannten Eigenschaften der offenporigen Schicht (10) aufweist, zusammengesintert werden.

10. Brennstoffzelle mit einem Element gemäss einem der Ansprüche 1 bis 7, dadurch gekennzeichnet, dass die Zelle im wesentlichen zentralsymmetrisch ausgebildet ist und dass die Zufuhrstellen (41a, 42a) für die Zufuhr der Gase zu den Elektroden (3, 1) im Zentrum vorgesehen sind.

11. Brennstoffzelle nach Anspruch 10, dadurch gekennzeichnet, dass die Zufuhrkanäle für die Gase (41, 410; 42, 43a, 43b, 45 - 48) als Wärmetauscherelemente zur Vorwärmung der Gase ausgebildet sind.

12. Batterie von Brennstoffzellen gemäss Anspruch 10 oder 11, dadurch gekennzeichnet, dass elektrochemisch aktive Elemente (1, 2, 3) mit Zuspeiseelementen (41, 42) für die Gase in einer alternierenden Abfolge stapelförmig angeordnet sind.

## Claims

1. Electrochemically active element which forms a separable component into a planar high temperature fuel cell comprising an open-pored structured layer (10) as a support structure, layer-like electrodes (1, 3) and a solid electrolyte (2) which, as an intermediate layer, connects the electrodes, wherein the one electrode, the cathode (1), is provided for reactions with oxygen from an oxygen containing gas, the cathode (1) is non-releasably connected to the structured layer (10), wherein the open-pored structure of this layer (10) is made cellular, comprises a ceramic material which is electrically conductive at the operational temperature of the fuel cell, and enables a flow of the oxygen containing gas parallel to the electrolyte layer, and wherein the thickness of the layer (10) is at least approximately twice as large as an average diameter of the structure cells (11), and the cathode (1) is connected directly to the layer (10) by sintering or by means of cathode material.

2. Element in accordance with claim 1, characterized in that the open-pored layer (10) is made of sintered cathode material.

3. Element in accordance with claim 1 or 2, characterized in that the open-pored layer (10) has the structure of an open-pore foam.

4. Element in accordance with one of the claims 1 to 3, characterized in that the open-pored layer (10) has a pore-sealing edge zone (14) at its side remote from the electrolyte layer.

5. Element in accordance with one of the claims 1 to 4, characterized in that channels (45 - 47) are provided in the open-pored layer for a preheating and infeed of the oxygen containing gas.

6. Element in accordance with one of the claims 1 to 5, characterized in that the cathode (1) forms a pore-closing edge zone of the open-pored layer.

7. Element in accordance with one of the claims 1 to 6, characterized in that the electrolyte layer (2) has a thickness smaller than 10 micrometers, preferably smaller than 3 micrometers.

8. Method for the manufacture of an element in accordance with one of the claims 1 to 7, characterized in that a pore closing cathode layer (110, 1) is applied onto a self-supporting plate (10') having the named properties of the open-pored layer (10'),, in that a thin electrolyte layer (2) is applied onto this layer by vapour or spray deposition and in that finally the electrolyte is coated with anode material (3).

9. Method for the manufacture of an element in accordance with one of the claims 1 to 5, characterized in that, on the one hand, an electrochemically active plate (20) comprising an electrolyte layer (2) and electrode layers (1, 3) applied on both sides thereof and, on the other hand, a self-supporting plate (10') having the named properties of the open-pored layer (10) are sintered together.

10. Fuel cell having an element in accordance with one of the claims 1 to 7, characterized in that the cell is substantially centrally symmetrically formed and in that the supply locations (41a, 42a) for the supply of the gases to the electrodes (3, 1) are provided in the center.

11. Fuel cell in accordance with claim 10, characterized in that the supply channels for the gases (41, 410; 42, 43a, 43b, 45 - 48) are formed as heat exchanger elements for the preheating of the gases.

12. Battery of fuel cells in accordance with claim 10 or claim 11, characterized in that electrochemically active elements (1, 2, 3) having feed-in elements (41, 42) for the gases are arranged in stack-like manner in an alternating sequence.

## Revendications

1. Elément électrochimique actif qui forme un élément séparable pour une pile à combustible haute température plane se composant d'une couche structurée à pores ouverts (10) en tant que structure de soutien, les d'électrodes en forme de couche (1, 3) et d'un électrolyte solide (2) qui en tant que couche intermédiaire relie les électrodes, où une électrode, la cathode (1) est prévue pour des réactions avec de l'oxygène provenant d'un gaz contenant de l'oxygène, la cathode (1) est reliée à la couche structurée (10) de façon non détachable, la structure à pores ouverts de cette couche (10) est de configuration cellulaire, se compose d'une matière céramique électriquement conductrice à la température de fonctionnement de la pile à combustible et permet un écoulement du gaz contenant de l'oxygène parallèlement à la couche d'électrolyte, l'épaisseur de la couche (10) est au moins environ deux fois aussi grande qu'un diamètre moyen des alvéoles (11) de la structure et la cathode (1) est reliée à la couche (10) par frittage, directement au moyen d'un matériau de cathode.

2. Elément selon la revendication 1 caractérisé en ce que la couche à pores ouverts (10) se compose d'un matériau fritté de cathode.

3. Elément selon la revendication 1 ou 2, caractérisé en ce que la couche à pores ouverts (10) présente la structure d'une mousse à pores ouverts.

4. Elément selon l'une des revendications 1 à 3, caractérisé en ce que la couche à pores ouverts (10) présente, du côté éloigné de la couche d'électrolyte, une zone de bordure (14) obturant les pores.

5. Elément selon l'une des revendications 1 à 4, caractérisé en ce que, dans la couche à pores ouverts sont prévus des canaux (45-47) pour un préchauffage et une alimentation du gaz contenant de l'oxygène.

6. Elément selon l'une des revendications 1 à 5, caractérisé en ce que la cathode (1) forme une zone de bordure fermant les pores de la couche à pores ouverts.

7. Elément selon l'une des revendications 1 à 6, caractérisé en ce que la couche d'électrolyte (2) présente une épaisseur plus petite que 10 microns, avantageusement plus petite que 3 microns.

8. Procédé pour la production d'un élément selon l'une des revendications 1 à 7, caractérisé en ce qu'on applique sur une plaque autonome (10') qui présente lesdites propriétés de la couche à pores ouverts (10'), une couche de cathode (110, 1) fermant les pores, en ce que sur cette couche est appliqué par vaporisation ou pulvérisation une couche d'électrolyte (2) et ensuite l'électrolyte est enduite du matériau d'anode (3).

9. Procédé pour la production d'un élément selon l'une des revendications 1 à 5, caractérisé en ce que d'une part une plaque électrochimique active (20), se composant d'une couche d'électrolyte (2) et des couches d'électrode (1,3) appliquées des deux côtés et d'autre part, une plaque autonome (10') qui présente lesdites propriétés de la couche à pores ouverts (10) sont frittées ensemble.

10. Pile à combustible avec un élément selon l'une des revendications 1 à 7, caractérisée en ce que la pile est de configuration essentiellement centralo-symétrique et en ce que les points d'amenée (41a, 42a) pour l'amenée des gaz vers les électrodes (3, 1) sont prévus au centre.

11. Pile à combustible selon la revendication 10, caractérisée en ce que les canaux d'amenée pour les gaz (41, 410; 42, 43a, 43b, 45 - 48) sont configurés comme des éléments échangeurs de chaleur pour le préchauffage des gaz.

12. Batterie de piles à combustible selon la revendication 10 ou 11, caractérisée en ce que des éléments électrochimiques actifs (1, 2, 3) avec éléments d'alimentation (41, 42) pour les gaz sont agencés de façon échelonnée en une suite alternée.
